# EUROPEAN PATENT APPLICATION

(11) **EP 1 093 258 A1**
(43) Date of publication of application: **18.04.2001**
(21) Application number: 00203409.8
(22) Date of filing: 02.10.2000
(51) Int. Cl.: H04L 12/56, H04L 29/12

(54) **Method and system for transmitting IP messages**

(30) Priority: 12.10.1999 NL 1013273
(71) Applicant: Koninklijke KPN N.V., 9726 AE Groningen (NL)
(72) Inventor: De Graaf, Wilbert Ludovicus Johanna Maria, San Francisco, CA 94115 (US); Snip, Jan Gerard, 2593 XD Den Haag (NL)
(74) Representative: Wuyts, Koenraad Maria

(57) **Abstract**

Method for, by an IP network (WWW), transmitting a message from a first network element (1) to a second network element (2). The route of the response to a message from a first (A) to a second network element (B) through the network may be changed by transmitting said message via an intermediary network element (3,4) having a routing- and addressing-conversion function to a preferred route. The intermediary server includes an address-converting module (NAT) which replaces the address of origin (A) of the message by the address (A',A'') of a intermediary server (3,4) which is preferred for response messages. A response message from the original receiving server (B) is addressed to the address (A',A'') of the preferred intermediary network element, which passes on the response message to the original sender (A).

## Description

### BACKGROUND OF THE INVENTION

The invention relates to a method for transmitting, via an IP network [IP = Internet Protocol], a message from a first network element to a second network element. The invention also relates to a system or a network element, as the case may be, for carrying out said method.

It is known that the Internet, the worldwide IP network, consists of a multiple of networks connected to one another.

When a network A transmits IP traffic to a network B, the network A must pay for this. Network A does not affect the path to be followed by the traffic once it is located outside network A. It is possible, though, to statically set a routing table, as a result of which the traffic chooses a specific output of the own network. Said practice, however, has the following drawbacks:
- In the exchange of IP traffic between, e.g., the U.S. and Europe, the volume of traffic from the U.S. to Europe is much larger than vice versa. Still, for political reasons the U.S. does not effect any large payments to Europe.
- Outside the own network, it cannot be checked via which networks or paths the traffic runs, while it would be preferred to choose networks having, e.g., high quality guarantees or, conversely, low costs.
- It is currently impossible to control the return path of the traffic outside the own network.

### SUMMARY OF THE INVENTION

The object of the invention is to overcome said drawbacks.

For this purpose, the above method for transmitting a message from a first network element to a second network element, according to the invention provides for the first network element addressing the message intended for the second network element to the IP address of (or routes it via, as the case may be) an intermediary network element, stating the IP address of the second network element as the address of destination, and the IP address of the first network element as the address of origin, whereafter the intermediary network element addresses the message received from the first network element to the IP address of the second network element, stating the IP address of the intermediary network element as the address of origin. In response to the message transmitted by the first network element, the second network element transmits a response message to the IP address of the intermediary network element, whereafter the intermediary network element addresses the received response message to the IP address of the first network element.

Essential for the invention, therefore, is the application of said intermediary network element, in which the transmitting, first network element chooses domicile, as it were, in such a manner that the receiving, second network element does not regard the address of the first network element as the sender, but rather the address of the intermediary network element, and therefore regards said address as the address to which the required response must be returned.
Preferably, the first network element addresses the message intended for the second network element to a first intermediary network element, stating the IP address of the second network element as the address of destination, and the IP address of the first network element as the address of origin, whereafter the intermediary network element addresses the message received from the first network element to the IP address of the second network element, stating the IP address of a second intermediary network element as the address of origin. The second network element, in response to the message transmitted by the first network element, transmits a response message (return message) to the IP address of the second intermediary network element, whereafter the second intermediary network element addresses the response message received to the IP address of the first network element. According to this option, the first intermediary network element sends the address of antoher, second intermediary network element, to which the second network element has to return its response messages. By this way the path of the return traffic -viz, via the second intermedairy network element- is set by means of the first intermediary network element. In other words, upstream traffic is routed via the first intermediary network element (selected by an overall traffic management -or network management- system), while the downstream traffic is routed via the second intermediary network element (the adress of which is set by the traffic management system in the first intermediary network element; the address of the originating first network element is sent to the second intermediary network element, thus enabling it to adress the response messages to the first network element).

The intermediary network element thus comprises means for converting messages originating from the first network element - having a first IP address as the address of origin, intended for a second network element having a second IP address as the address of destination - in messages having the IP address of the same or another intermediary network element as the new address of origin and unvariable address of destination. For the purpose of processing the response messages, the network element includes means for converting messages from the second network element - having the IP address of the (first or second) intermediary network element as the address of destination, and the IP address of the second network element as the address of origin - in messages having the IP address of the first network element as the new address of destination and unvariable address of origin.

A network element which is particularly suitable for the function described and - albeit for another purpose - is commercially available, is the Network Address Translator (NAT) as specified in IETF RFC 1631 [IETF = Internet Engineering Task Force, RFC = Request For Comments]. The NAT was originally intended to solve the scarcity of IPv4 addresses [IPv4 = Internet Protocol, version 4]. The present invention, however, uses the NAT to solve another problem, namely, to be capable of controlling IP traffic flows by means of address conversion, as was described above.

By applying the invention, the Internet traffic from the U.S. to Europe may be captured in the own network in the U.S., and be transported to Europe over an own connection. In this manner, the system according to the invention has control of the route followed by the traffic outside the own network. In addition, the invention offers a new option of directing traffic via a specific route within the own network.

The source (first network element) which wants to direct the traffic to a destination (second network element) regards the NAT (intermediary network element) as the (feigned) destination.

The destination regards the NAT as the (feigned) source. When the source and the destination transmit traffic to one another, in conformity with the present invention everything is passed on via the NAT without the source and the destination being aware of this and without the networks outside the own network being aware of this.

The NAT is used to see to it that the IP traffic is first transmitted to the NAT via a new path. As soon as the individual IP packages have arrived at the end of the new path - at the NAT - they are passed on to the destination, the packages being labeled with the address of the same intermediary NAT of another preferred NAT, set by the network or traffic management. Once it has arrived at the destination, the traffic in the opposite (downstream) direction is also transmitted by means of the (preferred) NAT via the new path. Directing traffic may offer advantages for reasons of security. Also, in this manner use may be made of preferred partners.

Apart from the option of routing IP traffic, this technique may also be applied to lay additional IP paths for a shorter period of time, the present invention saving the overhead of having to adapt the routing tables for said period of time.

### DESCRIPTION OF THE FIGURE

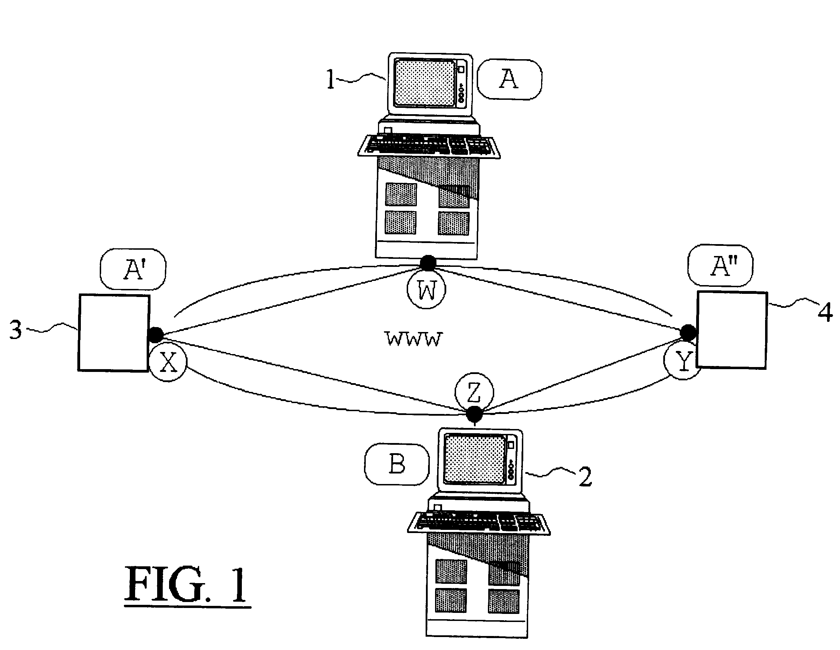

The operation of the invention is explained in greater detail by reference to FIG. 1. FIG. 1 schematically shows a system for, via an IP network WWW (the Internet) transmitting a message from a first network element, a client 1 in the location (domain) W having an IP address A, to a second network element, a server 2 in the location (domain) Z having an IP address B. In addition, FIG. 1 shows intermediary network elements, i.e., an intermediairy network element 3 (IP address A') having a routing- and addressing-conversion function (routing/converting server) in the location (domain) X, and an intermediairy network element 4 (IP address A'') having a routing- and addressing-conversion function (routing/conversion server) in the location (domain) Y.

The intermediary network element 3 - by way of example - includes a commercially available IETF RFC 1631 Network Address Translator (NAT) module which renders network element 3 suitable for receiving messages from client 1 and intended for server 2 - routed via network element 3 (having the IP address A'), stating the IP address B of server 2 as the address of destination, and the IP address A of client 1 as the address of origin - and the (re)addressing and transmitting of said messages received from client 1 to the IP address B of server 2, stating the IP address A' of network element 3 as the address of origin. Stated more succinctly, the NAT module converts the source or origin address of that of client 1 into that of network element 3, as a result of which the impression is given, towards server 2, that the message originates from network element 3 instead of from client 1.

In conformity with the Internet Protocol (IP), server 2 addresses its response to the message received to IP address A' of network element 3. The response messages which network element 3 receives back from server 2 in response to the message transmitted to server 2, are subsequently readdressed, by the NAT module, and transmitted to the IP address A of the client 1. In this manner, both messages from A to B, and response messages from B to A, are always conducted via network element 3 - due to said address conversion. Without the address conversion, server 2 would be free to let its messages run via network element 4 or via network element 3. If network element 4, just as network element 3, comprises an NAT module or another address-conversion module, then messages may be routed in the same manner, namely, via the network element 4.

It is therefore possible, from the own domain (the own location), to give direction to the route to be followed by the reply message in the other domain. Without the measures according to the invention, it is not (legally) possible to direct the reply message via a specific route outside the own network.

The use of the NAT module cannot be traced in the other network. Extension of the number of NATs -for instance upstream NATs 3 and downstream NATs 4- results in control being possible over several return paths.

Extension of the number of (NAT) addresses (A',A'',...) results in several client-server messages being capable of being transmitted; the number of messages may be so large that we may use the term traffic control. Such a traffic control may also be used in the own network to direct -via management of the NAT addresses (A',A'',...)- traffic in heavily congested routes via less heavily congested routes. Traffic control may also be used very well for asymmetrical connections, the forward route having to be another route (here via NAT 3) than the return route (here via NAT 4), e.g. in the event of satellite communication. If use is made of said traffic control capabilities of the system, viz, the option that one NAT (e.g. NAT 3) doesn't forward it's own IP address (A') to server 2 but to the (preferred) IP address (A'') of another NAT (e.g. NAT 4) to be used as the address for return messages, those return addresses (A'' instead of A' in server 3 and A' instead of A'' in server 4) may be set permanently in those servers 3 resp. 4. However, preferrably those preferred return addresses may be set by a (not shown) network management server, connected to the NAT servers 3 and 4, in a dynamic way, dependent of the network and server load, the traffic, etc.

### REFERENCES

"RFC 1631: The IP Network Address Translator (NAT)", K. Egevang and P. Francis, http://www.ietf.org/rfc/rfc1631.txt

## Claims

1. Method for, by an IP network, transmitting a message from a first network element (1) to a second network element (2), characterised in that the first network element addresses the message intended for the second network element to an intermediary network element (3,4), stating the IP address (B) of the second network element as the address of destination, and the IP address (A) of the first network element as the address of origin; whereafter the intermediary network element addresses the message received from the first network element to the IP address of the second network element, stating the IP address (A',A'') of the intermediary network element as the address of origin.

2. Method according to claim 1, characterised in that the second network element, in response to the message transmitted by the first network element, transmits a response message to the IP address (A') of the intermediary network element; whereafter the intermediary network element addresses the response message received to the IP address of the first network element.

3. Method according to claim 1, characterised in that the first network element addresses the message intended for the second network element to a first intermediary network element (3), stating the IP address (B) of the second network element as the address of destination, and the IP address (A) of the first network element as the address of origin; whereafter the intermediary network element addresses the message received from the first network element to the IP address of the second network element, stating the IP address (A'') of a second intermediary network element (4) as the address of origin.

4. Method according to claim 3, characterised in that the second network element, in response to the message transmitted by the first network element, transmits a response message to the IP address (A'') of the second intermediary network element (4); whereafter the second intermediary network element addresses the response message received to the IP address of the first network element.

5. System for, by an IP network, transmitting a message from a first network element (1) to a second network element (2), characterised by an intermediary network element (3) for receiving messages originating from the first network element and intended for the second network element, addressed to said intermediary network element, stating the IP address (B) of the second network element as the address of destination, and the IP address (A) of the first network element as the address of origin; which intermediary network element comprises means for addressing the messages received from the first network element to the IP address of the second network element, stating the IP address (A') of the intermediary network element as being the address of origin.

6. System according to claim 5, characterised in that the intermediary network element (3,4) addresses response messages received from the second network element (2), in response to the messages transmitted earlier by the first network element (1) via the intermediary network element (3,4) to the second network element (2), and transmits them to the IP address of the first network element (1).

7. System according to claim 5, characterised by a first intermediary network element (3) for receiving messages originating from the first network element and intended for the second network element, addressed to said first intermediary network element, stating the IP address (B) of the second network element as the address of destination, and the IP address (A) of the first network element as the address of origin; which first intermediary network element comprises means for addressing the messages received from the first network element to the IP address of the second network element, stating the IP address (A'') of a second intermediary network element (4) as being the address of origin.

8. System according to claim 7, characterised in that the second intermediary network (4) element addresses response messages received from the second network element (2), in response to the messages transmitted earlier by the first network element (1) via the first intermediary network element (3) to the second network element (2), and transmits them to the IP address of the first network element (1).

9. Network element for use in an IP network as an intermediary network element (3,4), characterised by means for converting messages originating from a first network element (1), having a first IP address (A) as the address of origin, destined for a second network element (2) having a second IP address (B) as the address of destination, in messages having the IP address (A',A'') of the intermediary network element as the new address of origin, and unvariable address of destination.

10. Network element according to claim 9, characterised by means for converting messages originating from the second network element (2), having the IP address (A',A'') of the intermediary network element (3,4) as the address of destination, and the IP address (B) of the second network element as the address of origin, in messages having the IP address (A) of the first network element (1) as the new address of destination, and unvariable address of origin.

11. Network element for use in an IP network as a first intermediary network element (3), characterised by means for converting messages originating from a first network element (1), having a first IP address (A) as the address of origin, destined for a second network element (2) having a second IP address (B) as the address of destination, in messages having the IP address (A'') of a second intermediary network element as the new address of origin, and unvariable address of destination.

12. Network element according to claim 9, 10 or 11, characterised in that said means for converting messages comprise a Network Address Translator (NAT) as specified in IETF RFC 1631.
